(19) Europäisches Patentamt
European Patent Office
Office européen des brevets

(11) **EP 3 489 195 A1**

(12) **EUROPEAN PATENT APPLICATION**
published in accordance with Art. 153(4) EPC

(43) Date of publication:
**29.05.2019 Bulletin 2019/22**

(51) Int Cl.:
**C01B 32/342** (2017.01)   **B01J 20/20** (2006.01)
**B01J 20/28** (2006.01)   **B01J 20/30** (2006.01)

(21) Application number: **17834252.3**

(22) Date of filing: **24.07.2017**

(86) International application number:
**PCT/JP2017/026711**

(87) International publication number:
**WO 2018/021246 (01.02.2018 Gazette 2018/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.07.2016   JP 2016145630**

(71) Applicants:
• **Osaka Gas Chemicals Co., Ltd.**
  **Osaka-shi, Osaka 550-0023 (JP)**
• **Jacobi Carbons Inc.**
  **Columbus, Ohio 43213 (US)**

(72) Inventors:
• **SEKI Kenji**
  **Osaka-shi**
  **Osaka 550-0023 (JP)**
• **FUJIWARA Hiromi**
  **Osaka-shi**
  **Osaka 550-0023 (JP)**
• **IWASHIMA Yoshinori**
  **Osaka-shi**
  **Osaka 550-0023 (JP)**

(74) Representative: **Lemcke, Brommer & Partner**
**Patentanwälte Partnerschaft mbB**
**Siegfried-Kühn-Straße 4**
**76135 Karlsruhe (DE)**

(54) **ACTIVATED CARBON PRODUCTION METHOD, ACTIVATED CARBON AND CANISTER**

(57)   Provided is a method for producing an activated carbon with which calcination and molding can be homogeneously performed and an activated carbon of stable quality can be produced. The method includes a plasticizing and densifying step of plasticizing and densifying a mixture of a wooden material and a phosphoric acid compound in a single-screw or twin-screw extruder-kneader under pressurizing and heating conditions until the loss on heating at 140°C for 30 minutes becomes between 10 mass% and 25 mass%, exclusive, to thereby obtain a carbonaceous material; an adjustment step of heat-treating the carbonaceous material after the plasticizing and densifying step until the loss on heating at 140°C for 30 minutes becomes between 3 mass% and 12 mass%, exclusive; and an activation treatment step of activating the carbonaceous material after the plasticizing and densifying step under heating conditions at a temperature between 400°C and 600°C, inclusive.

Fig.1

**Description**

Technical Field

The present invention relates to a method for producing an activated carbon, an activated carbon, and a canister.

Background Art

Conventionally, activated carbons activated with phosphoric acid are known. That is to say, when a carbonaceous raw material is impregnated with a chemical, such as phosphoric acid or a phosphoric acid salt such as sodium phosphate, and is then calcined, an extremely developed porous calcined carbon is obtained. The thus obtained activated carbon activated with phosphoric acid has, in general, a pore size distribution with a relatively large amount of mesopores, and is therefore suitably used for canisters.

Usually, the aforementioned calcination is performed by mixing a carbonaceous raw material and phosphoric acid using a mixer, plasticizing the mixture at a low temperature into a semi-carbonized state using a heater such as a rotary kiln, and reheating the plasticized carbonaceous material at a high temperature (see Patent Document 1, for example).

However, when calcining the plasticized carbonaceous material, the carbonaceous material may become a viscous lump or may become dry in characteristics depending on the characteristics of the carbonaceous material, and there are cases where its moldability significantly deteriorates. In such cases, handling will be difficult, the spot due to temperature during heating and the spot due to residence time in a heating apparatus will be significant, and a homogeneous porous structure exhibiting a sufficient adsorption capacity will not be obtained even after molding and activation.

To address these problems, Patent Document 1 proposes a method that involves adjustment of the moisture content and the heating temperature of the carbonaceous material followed by pelletization using an extrusion molding machine and a pin mixer as well as heating and calcination.

Prior Art Documents

Patent Documents

Patent Document 1: Japanese Patent No. 2618583

Disclosure of the Invention

Problem to be Solved by the Invention

However, with the method for producing an activated carbon according to Patent Document 1, it is still difficult to homogeneously calcine and mold a carbonaceous material while maintaining high productivity. Consequently, under the present conditions, it is not possible to efficiently provide an activated carbon with high adsorption performance and stable quality, and there is demand for improvement.

Therefore, in view of the above-described circumstances, an object of the present invention is to provide a method for producing an activated carbon with which plasticization, semi-carbonization, and molding can be performed and an activated carbon of stable quality can be produced, and to provide an activated carbon.

Means for Solving Problem

To achieve the object, a characteristic feature of a method for producing an activated carbon of the present invention lies in that the method includes:

a plasticizing and densifying step of plasticizing and densifying a mixture of a wooden material and a phosphoric acid compound in a single-screw or twin-screw extruder-kneader under kneading and heating conditions until a loss on heating at 140°C for 30 minutes becomes between 10 mass% and 25 mass%, exclusive, to thereby obtain a carbonaceous material;

an adjustment step of heat-treating the carbonaceous material after the plasticizing and densifying step until the loss on heating at 140°C for 30 minutes becomes between 3 mass% and 12 mass%, exclusive, to thereby obtain the resulting carbonaceous material; and

an activation treatment step of activating the carbonaceous material after the adjustment step under heating conditions at a temperature between 400°C and 600°C, inclusive.

When a wooden material and a phosphoric acid compound are mixed, the strong dehydrating effect of the phosphoric acid compound accelerates carbonization of the wooden material, and therefore, the carbon skeleton of the wooden material is likely to form a homogeneous porous structure and contributes to production of a good-quality activated carbon. When this reaction proceeds in a single-screw or twin-screw extruder-kneader, plasticization caused by the aforementioned effect proceeds, and since the wooden material is mixed while being pressurized through kneading without adding another substance such as a binder, a highly densified carbonaceous material is obtained. The inventors of the present invention newly found that this carbonaceous material can be molded with ease of handling and in a state in which high productivity is maintained, by controlling the properties of the carbonaceous material based on the loss on heating, and an activated carbon with high moldability and high adsorption capacity can be obtained even when activation is performed through heat treatment, and thus, accomplished the present invention.

That is to say, it became clear that, as a result of performing the adjustment step in which the carbonaceous material that has been plasticized and densified in the single-screw or twin-screw extruder-kneader under pressurizing and heating conditions until the loss on heating at 140°C for 30 minutes has become between 10 mass% and 25 mass%, exclusive, is heat-treated until the loss on heating at 140°C for 30 minutes becomes between 3 mass% and 12 mass%, exclusive, the carbonization reaction of the carbonaceous material proceeds to an appropriate extent, whereby the carbonaceous material becomes homogeneous and has high moldability, and when the molded carbonaceous material is activated, the carbonaceous material has a porous structure that is homogeneous and has a high porosity. Therefore, if the activation treatment step of performing activation under heating conditions at a temperature between 400°C and 600°C, inclusive, is performed using this carbonaceous material, a good-quality activated carbon having a porous structure that is homogeneous and has a high porosity can be obtained.

Accordingly, as a result of performing heat treatment of the above-described adjustment step, the properties of the carbonaceous material to be subjected to the activation step can be made homogeneous with less variations and can be adjusted to such properties that enable a good-quality porous structure to be obtained after the activation. Thus, it is possible to significantly improve the quality of an activated carbon to be obtained and to obtain the activated carbon in a stable manner, by adding a relatively simple operation step.

Moreover, the adjustment step can be performed under heating conditions at a temperature between 100°C and 200°C, inclusive.

In the adjustment step, the carbonaceous material obtained through the plasticizing and densifying step is heat-treated until the loss on heating at 140°C for 30 minutes becomes between 3 mass% and 12 mass%, exclusive. In order to obtain a product having such properties, it is preferable to set the heating conditions at a temperature between 100°C and 200°C, inclusive, because the processing can be performed quickly and under moderate conditions (that are less likely cause an unwanted side reaction).

Moreover, the heating conditions of the plasticizing and densifying step can include a heating condition of heating the carbonaceous material in the single-screw or twin-screw extruder-kneader to at least a temperature between 100°C and 230°C, inclusive, and the plasticizing and densifying step can be performed in a state in which the pressure inside the single-screw or twin-screw extruder-kneader is reduced to a pressure of -0.001 MPaG to -0.067 MPaG.

In the plasticizing and densifying step, the degree of plasticization achieved by kneading the carbonaceous material is adjusted, and it is preferable that the heating conditions of this step include a heating condition of heating the carbonaceous material in the single-screw or twin-screw extruder-kneader to at least a temperature between 100°C and 230°C, inclusive, because in this case the plasticizing and densifying step is performed in a favorable manner. Moreover, although the carbonaceous material generates various gases (volatile components) as the plasticization proceeds, the plasticization and densification can be advanced even further by removing these volatile components. Therefore, it is possible to advance the plasticization and densification in an efficient manner while removing various gases, by performing the plasticizing and densifying step in a state in which the pressure inside the single-screw or twin-screw extruder-kneader is reduced to a pressure of -0.001 MPaG to -0.067 MPaG.

Note that it is considered that, since densification in an existing facility is not performed under vacuum, volatile matter remains in a kneader, making it less likely that mechanical pressure is applied to the carbonaceous material and the density of the carbonaceous material is increased. Note that although the plasticizing and densifying step in the existing facility takes a total processing time of 62 h, if the above-described plasticizing and densifying step is performed, there are cases where the processing can be completed in approximately 3 minutes to 30 minutes.

Moreover, a molding step of molding the carbonaceous material to be subjected to the activation treatment step into pellets in advance can be performed.

It is preferable that an activated carbon is molded into pellets, because in this case it is easy to apply the activated carbon to various products. Here, it is conceivable that if an activated carbon that has been activated is molded into pellets, the porous structure itself of the activated carbon may become broken and the properties of the activated carbon may deteriorate, depending on a binder component or the like that is used or depending on the molding pressure; however, if the carbonaceous material in an intermediate state is pelletized and then activated, the whole amount of the obtained pellets becomes an activated carbon, so that high properties can be expected, and, furthermore, all the pellets are integrated during the activation, so that a high molding strength can be expected. A common extruder-kneader is used in the pelletization.

Moreover, it is also possible to further perform a pre-treatment step of hardening and reacting the carbonaceous material to be subjected to the activation treatment step through heat treatment in advance.

Moreover, based on examples, which will be described later, the pre-treatment step can be performed under heating conditions at a temperature between 210°C and 320°C, inclusive.

Note that the pre-treatment step can be performed in an inert gas or in a combustion exhaust gas.

The molded carbonaceous material is converted into an activated carbon through the activation treatment step, but it is expected that, during the activation treatment step, the molded carbonaceous material may be deformed or may be broken. To address this problem, the carbonaceous material is hardened through the pre-treatment in advance. Thus, the above-described problem in the activation treatment step is less likely to occur, and an activated carbon with high integral moldability and excellent properties can be obtained.

In the pre-treatment step, the carbonaceous material after the plasticizing and densifying step is hardened and reacted into a form that is easy to mold. However, a situation in which the porous structure of the carbonaceous material does not sufficiently grow due to oxidization is expected. Therefore, for the purpose of suppressing such a side action and stably forming the porous structure of the carbonaceous material, it is preferable to perform the pre-treatment step in an inert gas or in a combustion exhaust gas (environment in which the amount of oxygen is small).

Moreover, a characteristic feature of an activated carbon lies in that the activated carbon is obtained using the above-described production method.

Moreover, a characteristic feature of an activated carbon lies in that:

a BWC as determined by ASTM D5228 is less than 17,
a first ratio ($VA_{0.168}/VA_{0.9}$) is 0.64 or less, the first ratio being the ratio of an amount adsorbed ($VA_{0.168}$) of an amount of gas adsorbed in pores having a pore diameter that is equal to or smaller than a pore diameter corresponding to a relative pressure of 0.168 in a nitrogen adsorption isotherm at 77 K, to an amount of gas adsorbed ($VA_{0.9}$) in pores having a pore diameter that is equal to or smaller than a pore diameter (value calculated using the CI method) corresponding to a relative pressure of 0.9 in the nitrogen adsorption isotherm,
a second ratio (($VA_{0.484}-VA_{0.168}$)/$VA_{0.9}$) is 0.20 or more, the second ratio being the ratio of the difference ($VA_{0.484}-VA_{0.168}$) between an amount of gas adsorbed in pores having a pore diameter that is equal to or smaller than a pore diameter (value calculated using the CI method) corresponding to a relative pressure of 0.484 in the nitrogen adsorption isotherm at 77 K and the amount of gas adsorbed in the pores having a pore diameter that is equal to or smaller than the pore diameter corresponding to the relative pressure of 0.168 in the nitrogen adsorption isotherm, to the amount of gas adsorbed ($VA_{0.9}$) in the pores having a pore diameter that is equal to or smaller than the pore diameter (value calculated using the CI method) corresponding to the relative pressure of 0.9 in the nitrogen adsorption isotherm, and
a third ratio (($VA_{0.9}-VA_{0.484}$)/$VA_{0.9}$) is 0.13 or more, the third ratio being the ratio of the difference ($VA_{0.9}-VA_{0.484}$) between the amount of gas adsorbed in the pores having a pore diameter that is equal to or smaller than the pore diameter (value calculated using the CI method) corresponding to the relative pressure of 0.9 in the nitrogen adsorption isotherm at 77 K and the amount of gas adsorbed in the pores having a pore diameter that is equal to or smaller than the pore diameter (value calculated using the CI method) corresponding to the relative pressure of 0.484 in the nitrogen adsorption isotherm, to the amount of gas adsorbed ($VA_{0.9}$) in the pores having a pore diameter that is equal to or smaller than the pore diameter (value calculated using the CI method) corresponding to the relative pressure of 0.9 in the nitrogen adsorption isotherm; or
a BWC as determined by ASTM D5228 is 17 or more,
a first ratio ($VA_{0.168}/VA_{0.9}$) is 0.70 or less, the first ratio being the ratio of an amount adsorbed ($VA_{0.168}$) of an amount of gas adsorbed in pores having a pore diameter that is equal to or smaller than a pore diameter (value calculated using the CI method) corresponding to a relative pressure of 0.168 in a nitrogen adsorption isotherm at 77 K, to an amount of gas adsorbed ($VA_{0.9}$) in pores having a pore diameter that is equal to or smaller than a pore diameter (value calculated using the CI method) corresponding to a relative pressure of 0.9 in the nitrogen adsorption isotherm,
a second ratio (($VA_{0.484}-VA_{0.168}$)/$VA_{0.9}$) is 0.13 or more, the second ratio being the ratio of the difference ($VA_{0.484}-VA_{0.168}$) between an amount of gas adsorbed in pores having a pore diameter that is equal to or smaller than a pore diameter (value calculated using the CI method) corresponding to a relative pressure of 0.484 in the nitrogen adsorption isotherm at 77 K and the amount of gas adsorbed in the pores having a pore diameter that is equal to or smaller than the pore diameter (value calculated using the CI method) corresponding to the relative pressure of 0.168 in the nitrogen adsorption isotherm, to the amount of gas adsorbed ($VA_{0.9}$) in the pores having a pore diameter that is equal to or smaller than the pore diameter (value calculated using the CI method) corresponding to the relative pressure of 0.9 in the nitrogen adsorption isotherm, and
a third ratio (($VA_{0.9}-VA_{0.484}$)/$VA_{0.9}$) is 0.07 or more, the third ratio being the ratio of the difference ($VA_{0.9}-VA_{0.484}$)

between the amount of gas adsorbed in the pores having a pore diameter that is equal to or smaller than the pore diameter (value calculated using the CI method) corresponding to the relative pressure of 0.9 in the nitrogen adsorption isotherm at 77 K and the amount of gas adsorbed in the pores having a pore diameter that is equal to or smaller than the pore diameter (value calculated using the CI method) corresponding to the relative pressure of 0.484 in the nitrogen adsorption isotherm, to the amount of gas adsorbed ($VA_{0.9}$) in the pores having a pore diameter that is equal to or smaller than the pore diameter (value calculated using the CI method) corresponding to the relative pressure of 0.9 in the nitrogen adsorption isotherm.

Note that if the BWC as determined by ASTM D5228 is less than 17, the first ratio is 0.64 or less, but is more preferably 0.63 or less, and even more preferably 0.61 or less. Similarly, the second ratio is 0.20 (0.2) or more, but is preferably 0.21 or more, and preferably 0.23 or more. Similarly, the third ratio is 0.13 or more, but is preferably 0.14 or more, and more preferably 0.15 or more.

Moreover, if the BWC as determined by ASTM D5228 is 17 or more, the first ratio is 0.70 or less, but is preferably 0.68 or less. Similarly, the second ratio is 0.13 or more, but is preferably 0.14 or more, more preferably 0.15 or more, and even more preferably 0.24 or more. Similarly, the third ratio is 0.07 or more, but is preferably 0.08 or more, and more preferably 0.09 or more.

Moreover, it is preferable that, if the BWC as determined by ASTM D5228 is less than 17, a butane retentivity is 2 g/100 ml or less, and

it is preferable that, if the BWC as determined by ASTM D5228 is 17 or more, the butane retentivity is 2.7 g/100 ml or less.

Moreover, it is preferable that the activated carbon has a phosphorus content of 3 mass% or less when the phosphorus content is measured using fluorescence X-rays.

Note that these activated carbons can be produced using the above-described production method.

Since such an activated carbon has high adsorption performance and has high formability without resorting to a binder and the like, an activated carbon of stable quality can be obtained.

Moreover, it is preferable that a canister includes the above-described activated carbon as an adsorbent material.

Effects of Invention

Therefore, it is possible to efficiently provide an activated carbon with high adsorption performance (in particular, high butane adsorption and desorption performance) and stable quality, which is usefully used as a canister installed in automobiles and the like.

Brief Description of the Drawings

FIG. 1 is a flow diagram of an activated carbon production apparatus.
FIG. 2 is a graph showing the results of Example 4.
FIG. 3 is a graph showing the results of Example 5.

Best Mode for Carrying out the Invention

Hereinafter, a method for producing an activated carbon according to an embodiment of the present invention will be described. Although preferred embodiments are described below, these embodiments are described for more specifically illustrating the present invention. Various modifications can be made without departing from the gist of the invention, and the present invention is not limited to the following description.

(Activated Carbon Production Apparatus)

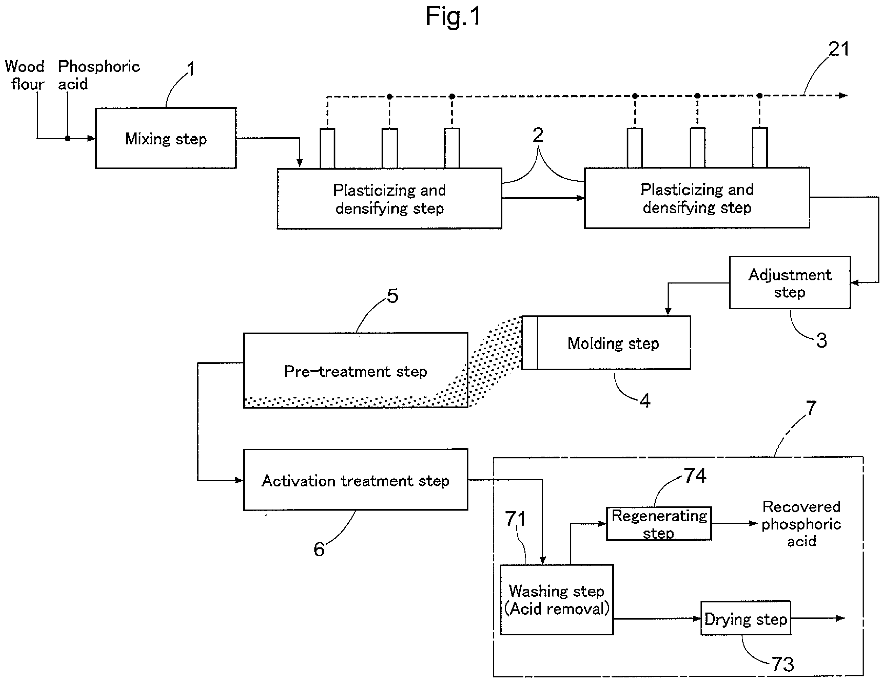

FIG. 1 shows an activated carbon production apparatus that performs a method for producing an activated carbon according to an embodiment of the present invention. The activated carbon production apparatus includes a mixer 1 that mixes a wooden material and a phosphoric acid compound, a single-screw or twin-screw extruder-kneader 2 that plasticizes and densifies the obtained mixture under heating conditions, a heat treatment apparatus 3 that performs heat treatment for adjusting the amount of volatile components contained in the obtained carbonaceous material, an extrusion molding apparatus 4 that molds the heat-treated carbonaceous material, a heating pre-treatment apparatus 5 that hardens and reacts the extrusion-molded carbonaceous material through heat treatment, and an activation furnace 6 that heats and activates the hardened and reacted carbonaceous material. Thus, the activated carbon production apparatus is configured to be capable of sequentially performing a mixing step (mixer 1), a plasticizing and densifying step (single-screw or twin-screw extruder-kneader 2), an adjustment step (heat treatment apparatus 3), a molding step (extrusion molding apparatus 4), a pre-treatment step (heating pre-treatment apparatus 5), and an activation treatment step (activation furnace 6). Moreover, in accordance with the usual method, the obtained activated carbon is subjected to a post-treatment apparatus 7 and processed into an activated carbon product.

(Mixer)

A so-called ribbon mixer is used as the mixer. The wooden material and the phosphoric acid compound are uniformly mixed to initiate the reaction. Although the mixing ratio can be changed as appropriate depending on the desired properties, in examples below, wood flour was used as the wooden material, and the ratio (mass ratio) of (wood flour/phosphoric acid) during the mixing was set at 1.6. Examples of the wooden material, which is used as a raw material, include lignocellulose and the like made from wood chips, wood flour, coconut shell, walnut shell, fruit stone and kernel, olive stone, and walnut stone. Examples of the phosphoric acid compound include phosphoric acid, polyphosphoric acid, pyrophosphoric acid, metaphosphoric acid, and these salts (e.g., sodium phosphate, calcium phosphate), and the like,

(Twin-Screw Extruder-Kneader: Plasticizing and Densifying Step)

Any twin-screw extruder-kneader that is capable of plasticizing and densifying the materials mixed in the mixer by kneading these materials while heating them can be used as the twin-screw extruder-kneader. Moreover, a multi-screw extrusion molding apparatus with blades and screws for kneading provided inside thereof is favorably used. Here, a twin-screw extruder-kneader is used that includes an exhaust portion from which volatile components that are generated during kneading are discharged to the outside through decompression, and in order to precisely control the heating conditions and the like, two twin-screw extruder-kneaders having the same performance are used in a manner in which the two extruder-kneaders are used consecutively. Note that the two twin-screw extruder-kneaders may individually be operated under different operating conditions, or single-screw extruder-kneaders may also be used.
Thus, the plasticizing and densifying step is performed under such conditions that, based on test results, which will be described later, the temperature of the carbonaceous material in the twin-screw extruder-kneader on the downstream side is between 100°C and 230°C, inclusive, to thereby achieve plasticization and densification.
Note that the plasticizing and densifying step is performed under pressurizing and heating conditions until the loss on heating at 140°C for 30 minutes becomes between 10 mass% and 25 mass%, exclusive. Also, the plasticizing and densifying step is performed in a state in which the pressure inside the single-screw or twin-screw extruder-kneaders is reduced to a pressure of -0.001 MPaG to -0.067 MPaG.

(Heat Treatment Apparatus: Adjustment Step)

Any heat treatment apparatus that is capable of continuously heating the carbonaceous material obtained through the plasticizing and densifying step for a predetermined period of time to thereby adjust the loss on heating of the carbonaceous material within a predetermined range can be used as the heat treatment apparatus.
The loss on heating is obtained by measuring the trend of a loss in the mass caused by volatilization of volatile components, such as water and decomposition products, when the carbonaceous material is heated, and obtained as a value calculated by test-heating the carbonaceous material after the heat treatment, which serves as an input sample, at 140°C for 30 minutes and dividing the difference between the mass of the resulting carbonaceous material and the mass of the input sample by the mass of the input sample.
Thus, the adjustment step is performed under such conditions that, based on the test results, which will be described later, heating is performed until the loss on heating at 140°C for 30 minutes becomes between 3 mass% and 12 mass%, exclusive. Preferably, the adjustment step is performed under such conditions that heating is performed until the loss on heating at 140°C for 30 minutes becomes between 6 mass% and 12 mass%, exclusive. In the case where the loss on heating is between 3 mass% and 6 mass%, exclusive, it is necessary to adjust moldability by adding water during the molding step, which is a downstream step.
Although the loss on heating here is set to be between 3 mass% and 12 mass%, exclusive, or preferably between 6 mass% and 12 mass%, exclusive, as appropriate values for 140°C and 30 minutes, it is also possible to set values for different measurement conditions (temperature and time) so that the set values correspond to the loss on heating at 140°C for 30 minutes of between 3 mass% and 12 mass%, exclusive, or preferably between 6 mass% and 12 mass%, exclusive.
Note that the adjustment step is performed under heating conditions at a temperature between 100°C and 200°C, inclusive.

(Extrusion Molding Apparatus: Molding Step)

Any extrusion molding apparatus that is capable of extruding the carbonaceous material obtained through the adjustment step from an extrusion nozzle at a leading end thereof while heating and kneading the carbonaceous material, and thereby processing the carbonaceous material into a predetermined shape can be used as the extrusion molding apparatus.

Thus, the molding step of processing the carbonaceous material obtained through the adjustment step into pellets with a particle size of 2 to 3 mm, for example, can be performed.

(Dry Treatment Apparatus: Pre-Treatment Step)

For example, a belt dryer or a fluidized bed dryer is used as the dry treatment apparatus. A fluidized bed dryer is a dryer in which the carbonaceous material is heated and dried while moving over a fluidized bed to which hot air is supplied from below, and drying is performed for 15 to 60 minutes under conditions at a temperature between 210°C and 320°C, inclusive.

(Activation Furnace: Activation Treatment Step)

For example, a rotary kiln-type heating apparatus that is commonly used in production of activated carbons is used as the activation furnace. In the activation furnace, the carbonaceous material after the plasticizing and densifying step is heated under such heating conditions that the temperature of the material in the furnace is between 400°C and 600°C, inclusive. Note that it is preferable to perform the activation treatment step after the plasticizing and densifying step, the adjustment step, the molding step, and the pre-treatment step have been performed in that order.

(Post-Treatment Apparatus)

Moreover, in accordance with the usual method, the obtained activated carbon (activated carbon activated with phosphoric acid) is subjected to a washing step (washing apparatus 71) and a drying step (drying apparatus 73) in the post-treatment apparatus 7 and processed into a product. Note that, in the diagram, an acid regenerator 74 regenerates the phosphoric acid compound that has been made reusable in the washing apparatus 71 and returns the phosphoric acid compound to the mixer 1 (regeneration step).

In the following description, the results of various experiments that were conducted in order to determine suitable conditions are shown.

Examples

(Test Example 7)

Mixing Step (Mixer 1): Charcoal and phosphoric acid were mixed in the mixer 1 at a ratio of 1.6 in terms of the mass ratio of wood flour/phosphoric acid.

Plasticizing and Densifying Step (Single-Screw or Twin-Screw Extruder-Kneaders 2): The mixture of charcoal and phosphoric acid mixed in the mixing step was introduced into the single-screw or twin-screw extruder-kneaders 2 at a feed rate of 275.3 kg/h, kneaded while being heated so that the material temperature on the upstream side was 186.7°C and the material temperature on the downstream side was 175.6°C, and thereby plasticized and densified to obtain a carbonaceous material. The average throughput of the single-screw or twin-screw extruder-kneaders 2 at this time was 148.8 kg/h. This plasticizing and densifying step was performed under pressurizing and heating conditions to such an extent that the loss on heating at 140°C for 30 minutes became between 10 mass% and 25 mass%, exclusive, and in a state in which the pressure inside the single-screw or twin-screw extruder-kneaders 2 was reduced to a range of -0.001 MPaG to -0.067 MPaG.

Adjustment Step (Heat Treatment Apparatus 3): The carbonaceous material obtained through the plasticizing and densifying step was introduced into the heat treatment apparatus 3 and heated until the loss on heating at 140°C for 30 minutes became within a range between 6 mass% and 12 mass%, exclusive.

Molding Step (Extrusion Molding Apparatus 4): The carbonaceous material obtained through the adjustment step was introduced into the extrusion molding apparatus 4 and processed into pellets with a particle size of 2 mm.

Pre-Treatment step (Heating Pre-Treatment Apparatus 5): The pelletized carbonaceous material after the molding step was introduced into the heating pre-treatment apparatus 5 and dried at 150°C for one hour under conditions of an air atmosphere.

Activation Treatment Step (Activation Furnace 6): The material after the pre-treatment step was introduced into the activation furnace 6 and heated under such heating conditions that the temperature of the material in the furnace was 500°C and the heating time was 20 minutes, to thereby produce an activated carbon.

Suitable Plasticizing and Densifying Step Conditions

In order to determine suitable conditions for the plasticizing and densifying step, carbonaceous materials obtained by altering the conditions for the plasticizing and densifying step differently in Test Examples 1 to 9 were evaluated. Table 1 shows the results. In Test Examples 1 to 6, 8, and 9, activated carbons were produced using a method similar to that of Test Example 7, except that the feed rate, the material temperature on the upstream side, the material temperature on the downstream side, and the average throughput were set as shown in Table 1.

In Table 1 below, with respect to the activated carbons obtained in the test examples, those having a BWC of at least 14.8 as determined by ASTM D5228 were evaluated as "Good", those having a hardness of at least 70 as determined by ASTM D3802 were evaluated as "Good", and those having a pore size distribution with a relatively large amount of mesopores were evaluated as "Good". Otherwise, the activated carbons were evaluated as "Poor".

Based on Table 1, it was found that, when performing the plasticizing and densifying step, it is preferable to conduct the main reaction at a temperature between 180°C and 230°C, inclusive, and perform kneading such that the temperature of the carbonaceous material that is plasticized and densified is within a range between 100°C and 230°C, inclusive.

Table 1

| Test Examples | | 1 | 2 | 3 | 4 | 5 | 6 | 7 | 8 | 9 |
|---|---|---|---|---|---|---|---|---|---|---|
| Feed rate of mixture of wood flour and phosphoric acid | kg/h | 83.9 | 208.2 | 220.4 | 220.4 | 275.3 | 275.3 | 275.3 | 318.4 | |
| Ratio of phosphoric acid to wood flour | - | 1.6 | 1.6 | 1.6 | 1.6 | 1.6 | 1.6 | 1.6 | 1.6 | 1.6 |
| Average throughput | kg/h | | 143.8 | 135.2 | 118.4 | 171 | 147 | 148.8 | 140.2 | 140.2 |
| Material temperature on upstream side | °C | 154.4 | 181.7 | 184.4 | 187.2 | 185 | 188.3 | 186.7 | 210.6 | 232.2 |
| Material temperature on downstream side | °C | 54.4 | 121.1 | 134.4 | 162.8 | 172.2 | 175.6 | 175.6 | 199.4 | 232.2 |
| Performance of activated carbon | BWC | Good | Good | Good | Good | Good | Good | Good | Good | Good |
| | Hardness | Good | Good | Good | Good | Good | Good | Good | Good | Poor |
| | Pore size distribution | Poor | Good | Good | Good | Good | Good | Good | Good | Poor |

(Suitable Pre-Treatment Step Conditions)

With respect to the pelletized carbonaceous materials after the molding step, the pre-treatment step was performed under various conditions.

Table 2 shows the results. In Table 2, pellets obtained from the same lot are indicated by the same sample number, the temperature indicates an average value of the material temperature during the pre-treatment step, the butane adsorption performance refers to the butane adsorption performance (Butane Activity, mass%) as determined by ASTM D5228, the BWC refers to the butane working capacity as determined by ASTM D5228, and the hardness refers to the pellet hardness obtained in compliance with ASTM D3802.

With respect to a plurality of Samples 1 to 3, activated carbons were produced according to a method similar to that of Test Example 7, except that, in the pre-treatment step, the conditions of the atmosphere and the temperature were set as shown in Table 2.

Based on Table 2, it was found that it is preferable that the heat treatment prior to the activation treatment step is performed at a temperature between 210°C and 320°C, inclusive, and the higher the temperature, the more the adsorption performance is improved, but the hardness tends to decrease as the adsorption performance improves (Samples 1). Also, it was found that, when heat treatment was performed in a combustion exhaust gas atmosphere (reducing atmosphere) instead of performing the heat treatment in an air atmosphere, the decrease in the hardness with the increase in the heat treatment temperature was suppressed (Samples 2 and 3).

Table 2

| Sample | Atmosphere | Temperature | Butane adsorption performance (%) | BWC | Hardness |
|---|---|---|---|---|---|
| 1 | Air | - | 51.7 | 15.2 | 74 |
| 1 | Air | 185 | 51.9 | 15.7 | 70 |
| 1 | Air | 199 | 52 | 15.7 | 75 |
| 1 | Air | 210 | 55 | 16.2 | 65 |
| 1 | Air | 220 | 56.5 | 16.5 | 68 |
| 1 | Air | 230 | 57.3 | 16.4 | 66 |
| 1 | Air | 250 | 59.1 | 16.2 | 64 |
| 1 | Air | 320 | 59.2 | 15.5 | 57 |
| 2 | Combustion exhaust gas | - | 53.9 | 15.6 | 68 |
| 2 | Combustion exhaust gas | 210 | 54.8 | 15.9 | 84 |
| 2 | Combustion exhaust gas | 230 | 56.4 | 16 | 87 |
| 2 | Combustion exhaust gas | 250 | 57.8 | 16.2 | 74 |
| 3 | Combustion exhaust gas | - | 54.6 | 15.2 | 71 |
| 3 | Combustion exhaust gas | 220 | 55.8 | 15.7 | 74 |
| 3 | Combustion exhaust gas | 230 | 60.7 | 16.4 | 84 |
| 3 | Combustion exhaust gas | 240 | 60 | 16.7 | 83 |
| 3 | Combustion exhaust gas | 250 | 59.9 | 16.7 | 77 |
| 3 | Combustion exhaust gas | 270 | 59.2 | 16.1 | 86 |
| 3 | Combustion exhaust gas | 290 | 59 | 16 | 71 |
| 3 | Air | 230 | 61.7 | 16.8 | 55 |

(Suitable Adjustment Step Conditions)

With respect to the carbonaceous materials after the plasticizing and densifying step, the formability of products obtained by altering the conditions for the adjustment step differently was examined. The results were as shown in Table 3. With respect to specimens that were used, activated carbons were produced using a method similar to that of Test Example 7, except that the loss on drying in the pre-treatment step was varied differently.

Based on Table 3, it was found that if the loss on heating in the adjustment step is excessively large, pellets are viscous, and a sufficient strength cannot be achieved, whereas if the loss on heating is excessively small, pellets are not sufficiently integrated, and a sufficient strength cannot be achieved, and it was found that if water is not added during molding in the downstream step, it is preferable to perform heat treatment until the loss on heating at 140°C for 30 minutes becomes between 6 mass% and 12 mass%, exclusive. Also, it was found that if water is added during molding in the downstream step, a favorable molded product can be obtained even when heat treatment is performed until the loss on heating at 140°C for 30 minutes becomes between 3 mass% and 6 mass%, exclusive.

Table 3

| Loss on drying (%) | Moldability | Hardness | Addition of water prior to molding (Ratio of added water to kneaded product) |
|---|---|---|---|
| 2 | Good | Low | Added (13%) |
| 3 | Good | High | Added (11%) |
| 6 | Good | High | Added (9%) |
| 6 | Cracking occurred | Low | Not added |
| 7.5 | Good | High | Not added |
| 9 | Good | High | Not added |
| 12 | Pellets adhered to one another | Low | Not added |
| | | | (% means mass%) |

(Relationship between Pore Diameter and Pore Volume (Log Differential Pore Volume))

In all of the obtained activated carbons,
if the BWC as determined by ASTM D5228 was less than 17,
a first ratio ($VA_{0.168}/VA_{0.9}$) was 0.64 or less, the first ratio being the ratio of the amount adsorbed ($VA_{0.168}$) of the amount of gas adsorbed in pores having a pore diameter that is equal to or smaller than a pore diameter corresponding to a relative pressure of 0.168 in a nitrogen adsorption isotherm at 77 K, to the amount of gas adsorbed ($VA_{0.9}$) in pores having a pore diameter that is equal to or smaller than a pore diameter corresponding to a relative pressure of 0.9 in the nitrogen adsorption isotherm, a second ratio (($VA_{0.484}$-$VA_{0.168}$)/$VA_{0.9}$) was 0.20 (0.2) or more, the second ratio being the ratio of the difference ($VA_{0.484}$-$VA_{0.168}$) between the amount of gas adsorbed in pores having a pore diameter that is equal to or smaller than a pore diameter corresponding to a relative pressure of 0.484 in the nitrogen adsorption isotherm at 77 K and the amount of gas adsorbed in the pores having a pore diameter that is equal to or smaller than the pore diameter corresponding to the relative pressure of 0.168 in the nitrogen adsorption isotherm, to the amount of gas adsorbed ($VA_{0.9}$) in the pores having a pore diameter that is equal to or smaller than the pore diameter corresponding to the relative pressure of 0.9 in the nitrogen adsorption isotherm, and a third ratio (($VA_{0.9}$-$VA_{0.484}$)/$VA_{0.9}$) was 0.13 or more, the third ratio being the ratio of the difference ($VA_{0.9}$-$VA_{0.484}$) between the amount of gas adsorbed in the pores having a pore diameter that is equal to or smaller than the pore diameter corresponding to the relative pressure of 0.9 in the nitrogen adsorption isotherm at 77 K and the amount of gas adsorbed in the pores having a pore diameter that is equal to or smaller than the pore diameter corresponding to the relative pressure of 0.484 in the nitrogen adsorption isotherm, to the amount of gas adsorbed ($VA_{0.9}$) in the pores having a pore diameter that is equal to or smaller than the pore diameter corresponding to the relative pressure of 0.9 in the nitrogen adsorption isotherm; and
if the BWC as determined by ASTM D5228 was 17 or more,
the first ratio ($VA_{0.168}/VA_{0.9}$) was 0.70 or less, the first ratio being the ratio of the amount adsorbed ($VA_{0.168}$) of the amount of gas adsorbed in pores having a pore diameter that is equal to or smaller than a pore diameter corresponding to the relative pressure of 0.168 in a nitrogen adsorption isotherm at 77 K, to the amount of gas adsorbed ($VA_{0.9}$) in pores having a pore diameter that is equal to or smaller than a pore diameter corresponding to the relative pressure of 0.9 in the nitrogen adsorption isotherm,
the second ratio (($VA_{0.484}$-$VA_{0.168}$)/$VA_{0.9}$) was 0.13 or more, the second ratio being the ratio of the difference ($VA_{0.484}$-$VA_{0.168}$) between the amount of gas adsorbed in pores having a pore diameter that is equal to or smaller than a pore diameter corresponding to the relative pressure of 0.484 in the nitrogen adsorption isotherm at 77 K and the amount of gas adsorbed in the pores having a pore diameter that is equal to or smaller than the pore diameter corresponding to the relative pressure of 0.168 in the nitrogen adsorption isotherm, to the amount of gas adsorbed ($VA_{0.9}$) in the pores having a pore diameter that is equal to or smaller than the pore diameter corresponding to the relative pressure of 0.9 in the nitrogen adsorption isotherm, and

the third ratio (($VA_{0.9}$-$VA_{0.484}$)/$VA_{0.9}$) was 0.07 or more, the third ratio being the ratio of the difference ($VA_{0.9}$-$VA_{0.484}$) between the amount of gas adsorbed in the pores having a pore diameter that is equal to or smaller than the pore diameter corresponding to the relative pressure of 0.9 in the nitrogen adsorption isotherm at 77 K and the amount of gas adsorbed in the pores having a pore diameter that is equal to or smaller than the pore diameter corresponding to the relative pressure of 0.484 in the nitrogen adsorption isotherm, to the amount of gas adsorbed ($VA_{0.9}$) in the pores having a pore diameter that is equal to or smaller than the pore diameter corresponding to the relative pressure of 0.9 in the nitrogen adsorption isotherm, and it became clear that the pore diameter distribution was concentrated in a region that is suitable for repeated adsorption and release of butane.

Note that if the BWC as determined by ASTM D5228 is less than 17, the preferred first ratio is 0.64 or less, preferably 0.63 or less, and more preferably 0.61 or less. Similarly, the preferred second ratio is 0.20 (0.2) or more, preferably 0.21 or more, and preferably 0.23 or more. Similarly, the preferred third ratio is 0.13 or more, preferably 0.14 or more, and more preferably 0.15 or more.

Moreover, if the BWC as determined by ASTM D5228 is 17 or more, the preferred first ratio is 0.70 or less, and preferably 0.68 or less. Similarly, the preferred second ratio is 0.13 or more, preferably 0.14 or more, more preferably 0.15 or more, and even more preferably 0.24 or more. Similarly, the third ratio is 0.07 or more, preferably 0.08 or more, and more preferably 0.09 or more.

Moreover, with respect to the rate of decrease of BWC performance (rate of decrease of BWC after a gasoline adsorption and desorption test was repeated 200 times relative to the initial value of BWC) and the rate of decrease of gasoline adsorption performance (rate of decrease of GWC (gasoline adsorption performance, which is ORVR test result regulated by the EPA) after adsorption and desorption of gasoline were repeated 200 times relative to the initial GWC) as well, while B: Test Example 1 and D: an conventional activated carbon showed significant decreases, no significant decreases were observed, and it was found that activated carbons with extremely high performance were obtained.

Table 4

| | First ratio | Second ratio | Third ratio | Rate of decrease of BWC performance | Rate of decrease of adsorption performance | Amount of residual phosphorus | Amount of retention volume |
|---|---|---|---|---|---|---|---|
| A: Test Example 7 | 0.59 | 0.2 | 0.21 | 7% | | 1.0 | 1.8 |
| B: Test Example 1 | 0.68 | 0.21 | 0.11 | 11% | | 3.3 | 1.7 |
| C: Test Example 2 | 0.59 | 0.25 | 0.16 | | 8% | 1.6 | 1.5 |
| D: Conventional activated carbon | 0.65 | 0.2 | 0.14 | | 16% | 2.9 | 2.7 |

(Relationship between Amount of Residual Phosphoric Acid and Amount of Butane Retention)

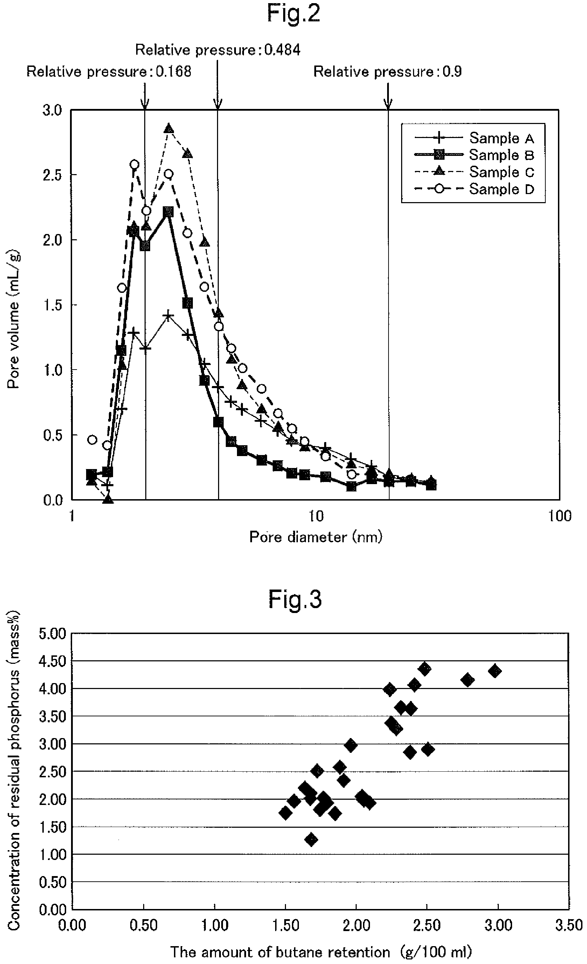

With respect to activated carbons including those of Test Examples 2 to 7, which were activated and produced under the above-described conditions, the relationship between the amount of butane retention (Butane retentivity of ASTM D5228) and the residual phosphorus concentration was examined. The results were as shown in FIG. 3. The residual phosphorus concentration was obtained based on the peak ratio of P obtained through fluorescence X-ray analysis of each of the obtained activated carbons. As a result, it was found that an activated carbon with an amount of butane retention (Butane retentivity of ASTM D5228) of 2 g/100 ml or less has high BWC and high adsorption and desorption performance. Moreover, there is a relationship between the amount of butane retention and the residual phosphorus concentration in an activated carbon, and an activated carbon with a phosphorus concentration of 3 mass% or less has high adsorption and desorption performance.

There also is a correlation of optimum values between the value of BWC and the amount of butane retention, and it was found that, if the BWC is less than 17, it is desirable that the first ratio ($VA_{0.168}$/$VA_{0.9}$) is 0.64 or less, the first ratio being the ratio of the amount adsorbed ($VA_{0.168}$) of the amount of gas adsorbed in pores having a pore diameter that is equal to or smaller than a pore diameter (value calculated using the CI method) corresponding to the relative pressure of 0.168 in a nitrogen adsorption isotherm at 77 K, to the amount of gas adsorbed ($VA_{0.9}$) in pores having a pore diameter that is equal to or smaller than a pore diameter (value calculated using the CI method) corresponding to the relative pressure of 0.9 in the nitrogen adsorption isotherm,

the second ratio $((VA_{0.484}-VA_{0.168})/VA_{0.9})$ is 0.20 (0.2) or more, the second ratio being the ratio of the difference $(VA_{0.484}-VA_{0.168})$ between the amount of gas adsorbed in pores having a pore diameter that is equal to or smaller than a pore diameter (value calculated using the CI method) corresponding to the relative pressure of 0.484 in the nitrogen adsorption isotherm at 77 K and the amount of gas adsorbed in the pores having a pore diameter that is equal to or smaller than the pore diameter (value calculated using the CI method) corresponding to the relative pressure of 0.168 in the nitrogen adsorption isotherm, to the amount of gas adsorbed $(VA_{0.9})$ in the pores having a pore diameter that is equal to or smaller than the pore diameter (value calculated using the CI method) corresponding to the relative pressure of 0.9 in the nitrogen adsorption isotherm, and

the third ratio $((VA_{0.9}-VA_{0.484})/VA_{0.9})$ is 0.13 or more, the third ratio being the ratio of the difference $(VA_{0.9}-VA_{0.484})$ between the amount of gas adsorbed in the pores having a pore diameter that is equal to or smaller than the pore diameter (value calculated using the CI method) corresponding to the relative pressure of 0.9 in the nitrogen adsorption isotherm at 77 K and the amount of gas adsorbed in the pores having a pore diameter that is equal to or smaller than the pore diameter (value calculated using the CI method) corresponding to the relative pressure of 0.484 in the nitrogen adsorption isotherm, to the amount of gas adsorbed $(VA_{0.9})$ in the pores having a pore diameter that is equal to or smaller than the pore diameter (value calculated using the CI method) corresponding to the relative pressure of 0.9 in the nitrogen adsorption isotherm, and it is desirable that the amount of butane retention is 2 g/100 ml or less.

Note that if the BWC as determined by ASTM D5228 is less than 17, the first ratio is 0.64 or less, but is more preferably 0.63 or less, and even more preferably 0.61 or less. Similarly, the second ratio is 0.20 (0.2) or more, but is preferably 0.21 or more, and preferably 0.23 or more. Similarly, the third ratio is 0.13 or more, but is preferably 0.14 or more, and more preferably 0.15 or more.

(Correlation between the Value of BWC and Amount of Butane Retention)

As Test Example 10, the plasticizing and densifying step was performed under the conditions shown in Table 5, and an activated carbon was activated and produced under the above-described conditions. The performance of the thus obtained activated carbon was measured, and it was found that an activated carbon with BWC = 17.7 was obtained. In Test Example 10, the activated carbon was produced using a method similar to that of Test Example 7, except that, in the plasticizing and densifying step, the material temperature on the upstream side was set to be 230°C, and the material temperature on the downstream side was set to be 174°C.

Table 5

| Test Example | | | | 10 |
|---|---|---|---|---|
| Feed rate of mixture of wood flour and phosphoric acid | | | kg/h | - |
| Ratio of phosphoric acid to wood flour | | | - | 1.6 |
| Average throughput | | | kg/h | - |
| Material temperature on upstream side | | | °C | 230 |
| Material temperature on downstream side | | | °C | 174 |
| Performance of activated carbon | Butane adsorption performance | | mass% | 63.3 |
| | BWC | | | 17.7 |
| | Butane retention rate | | | 2.61 |
| | Hardness | | | 71 |
| | Pore size distribution | First ratio | | 0.68 |
| | | Second ratio | | 0.24 |
| | | Third ratio | | 0.08 |

As a result, it was found that, if the BWC is 17 or more,

it is desirable that the first ratio $(VA_{0.168}/VA_{0.9})$ is 0.70 or less, the first ratio being the ratio of the amount adsorbed $(VA_{0.168})$ of the amount of gas adsorbed in pores having a pore diameter that is equal to or smaller than a pore diameter (value calculated using the CI method) corresponding to the relative pressure of 0.168 in a nitrogen adsorption isotherm at 77 K, to the amount of gas adsorbed $(VA_{0.9})$ in pores having a pore diameter that is equal to or smaller than a pore diameter (value calculated using the CI method) corresponding to the relative pressure of 0.9 in the nitrogen adsorption isotherm,

the second ratio $((VA_{0.484}-VA_{0.168})/VA_{0.9})$ is 0.13 or more, the second ratio being the ratio of the difference $(VA_{0.484}-VA_{0.168})$ between the amount of gas adsorbed in pores having a pore diameter that is equal to or smaller than a pore diameter (value calculated using the CI method) corresponding to the relative pressure of 0.484 in the nitrogen adsorption isotherm at 77 K and the amount of gas adsorbed in the pores having a pore diameter that is equal to or smaller than the pore diameter corresponding to the relative pressure of 0.168 in the nitrogen adsorption isotherm, to the amount of gas adsorbed $(VA_{0.9})$ in the pores having a pore diameter that is equal to or smaller than the pore diameter (value calculated using the CI method) corresponding to the relative pressure of 0.9 in the nitrogen adsorption isotherm, and

the third ratio $((VA_{0.9}-VA_{0.484})/VA_{0.9})$ is 0.07 or more, the third ratio being the ratio of the difference $(VA_{0.9}-VA_{0.484})$ between the amount of gas adsorbed in the pores having a pore diameter that is equal to or smaller than the pore diameter (value calculated using the CI method) corresponding to the relative pressure of 0.9 in the nitrogen adsorption isotherm at 77 K and the amount of gas adsorbed in the pores having a pore diameter that is equal to or smaller than the pore diameter corresponding to the relative pressure of 0.484 in the nitrogen adsorption isotherm, to the amount of gas adsorbed $(VA_{0.9})$ in the pores having a pore diameter that is equal to or smaller than the pore diameter corresponding to the relative pressure of 0.9 in the nitrogen adsorption isotherm, and

it is desirable that the amount of butane retention is about 2.7 g/100 ml or less.

Moreover, in this case, the first ratio is 0.70 or less, but is preferably 0.68 or less. Similarly, the second ratio is 0.13 or more, but is preferably 0.14 or more, more preferably 0.15 or more, and even more preferably 0.24 or more. Similarly, the third ratio is 0.07 or more, but is preferably 0.08 or more, and more preferably 0.09 or more.

(Ratio of Mesopore Region to Micropore Region)

Next, the inventors of the present invention conducted research on a pore region with an optimum pore diameter distribution in an activated carbon for a canister. As an optimum pore region in an activated carbon for a canister, a pore region is preferable in which the adsorption performance of the activated carbon is high even immediately after repeated adsorption and desorption of at least one of butane and gasoline. The adsorption performance is measured in compliance with ASTM D5228, for example. The inventors of the present invention conducted in-depth research and finally found that a pore region with high adsorption and desorption performance for butane, gasoline, and the like is constituted by pores of a mesopore region, and, in particular, mesopores corresponding to a relative pressure range between 0.168 and 0.484, inclusive, in the above-described nitrogen adsorption isotherm are suitable.

Moreover, micropores corresponding to a relative pressure range of 0.168 or less initially have high adsorption performance for butane, gasoline, and the like. However, in an activated carbon having micropores, after adsorption and desorption of butane, gasoline, and the like are repeatedly performed, butane, gasoline, and the like are adsorbed in pores with an extremely strong interaction. Therefore, large amounts of butane, gasoline, and the like remain in the pores after desorption. Consequently, repeated use of a canister having micropores leads to a decrease in BWC.

On the other hand, in the case of mesopores and macropores corresponding to a relative pressure range of 0.484 or more, the pores are excessively large, and the interaction of the pores with butane, gasoline, and the like is weak. Consequently, the adsorption performance is low.

Based on the above findings, it is preferable to maximize the ratio of $VA_{0.484}-VA_{0.168}$, which is the volume of the above-described mesopore region, to the total volume of pores and minimize the ratio of $VA_{0.168}$, which indicates the volume of the micropore region, to the total volume of pores. That is to say, it is preferable that a fourth ratio $((VA_{0.484}-VA_{0.168})/VA_{0.9})/(VA_{0.168}/VA_{0.9})$, which serves as an index representing the relationship between the two ratios, is high. In the case of an activated carbon in which this fourth ratio is high, the adsorption performance immediately after repeated adsorption and desorption of butane, gasoline, and the like on the activated carbon is high. Here, $(VA_{0.484}-VA_{0.168})/VA_{0.9}$ is the ratio (the above-described second ratio) of the difference $(VA_{0.484}-VA_{0.168})$ between the amount of gas adsorbed in pores having a pore diameter that is equal to or smaller than a pore diameter corresponding to the relative pressure of 0.484 in a nitrogen adsorption isotherm at 77 K and the amount of gas adsorbed in pores having a pore diameter that is equal to or smaller than a pore diameter corresponding to the relative pressure of 0.168 in the nitrogen adsorption isotherm, to the amount of gas adsorbed $(VA_{0.9})$ in pores having a pore diameter that is equal to or smaller than a pore diameter corresponding to the relative pressure of 0.9 in the nitrogen adsorption isotherm. Also, $(VA_{0.168}/VA_{0.9})$ is the ratio (the above-described first ratio) of the amount adsorbed $(VA_{0.168})$ of the amount of gas adsorbed in the pores having a pore diameter that is equal to or smaller than the pore diameter corresponding to the relative pressure of 0.168 in the nitrogen adsorption isotherm at 77 K, to the amount of gas adsorbed $(VA_{0.9})$ in the pores having a pore diameter that is equal to or smaller than the pore diameter corresponding to the relative pressure of 0.9 in the nitrogen adsorption isotherm.

Activated carbons of examples and comparative examples were produced under the following conditions, and the performance of the activated carbons was measured. Table 6 shows the results. It can be seen from the results below that, in the examples, if the fourth ratio was 0.32 or more, the amount of butane retention was low, and was 2.0 g/100 ml. Moreover, it can be seen that, in the examples, the rate of decrease of BWC performance and the rate of decrease of adsorption performance were also low. Therefore, the value of the fourth ratio is 0.32 or more, preferably 0.34 or more, and more preferably 0.38 or more.

Test Examples 2, 3, 6, and 7 in Table 1, a Sample 3 in Table 2, and Test Example 10 were used as the examples. The Sample 3 in Table 2 that was used as the example here was one of the plurality of Samples 3 in Table 2 that was subjected to the pre-treatment step under conditions in a combustion exhaust gas atmosphere at a temperature of 240°C.

Sample D (conventional activated carbon) in Table 4, Test Example 1 in Table 1, and a comparative test example (BAX1700 manufactured by Ingevity) were used as the comparative examples.

Table 6

| | a) | b) | b)/a) | BWC | Amount of Butane retention g/100ml | Rate of decrease of BWC performance | Rate of decrease of adsorption performance |
|---|---|---|---|---|---|---|---|
| Examples | | | | | | | |
| Table 1 Test Example 2 | 0.59 | 0.25 | 0.42 | 14.7 | 1.5 | | 8% |
| Table 1 Test Example 3 | 0.60 | 0.24 | 0.40 | 15.5 | 1.5 | | |
| Table 1 Test Example 6 | 0.59 | 0.25 | 0.42 | 14.7 | 1.4 | | |
| Table 2 Sample 3 | 0.63 | 0.24 | 0.38 | 16.7 | 1.9 | | |
| Table 1 Test Example 7 | 0.59 | 0.20 | 0.34 | 11.4 | 1.8 | 7% | |
| Test Example 10 | 0.68 | 0.24 | 0.35 | 17.7 | 2.6 | | |
| Comparative Examples | | | | | | | |
| Table 4 Sample D | 0.65 | 0.20 | 0.31 | 15.1 | 2.7 | | 16% |
| Table 1 Test Example 1 | 0.68 | 0.21 | 0.31 | 14.7 | 1.7 | 11% | |
| Comparative test example | 0.67 | 0.21 | 0.31 | 17.2 | 2.8 | | |

$$a) = \frac{VA_{0.168}}{VA_{0.9}}$$

$$b) = \frac{(VA_{0.484} - VA_{0.168})}{VA_{0.9}}$$

Industrial Applicability

An activated carbon that is obtained according to the present invention has high butane adsorption and desorption performance and can be usefully used as a canister installed in automobiles and the like.

Description of Reference Signs

2: Twin-screw extruder-kneader

**Claims**

1. A method for producing an activated carbon, the method comprising:

    a plasticizing and densifying step of plasticizing and densifying a mixture of a wooden material and a phosphoric acid compound in a single-screw or twin-screw extruder-kneader under kneading and heating conditions until a loss on heating at 140°C for 30 minutes becomes between 10 mass% and 25 mass%, exclusive, to thereby obtain a carbonaceous material;
    an adjustment step of heat-treating the carbonaceous material after the plasticizing and densifying step until the loss on heating at 140°C for 30 minutes becomes between 3 mass% and 12 mass%, exclusive, to thereby obtain the resulting carbonaceous material; and
    an activation treatment step of activating the carbonaceous material after the adjustment step under heating conditions at a temperature between 400°C and 600°C, inclusive.

2. The method for producing an activated carbon according to claim 1, wherein the adjustment step is performed under heating conditions at a temperature between 100°C and 200°C, inclusive.

3. The method for producing an activated carbon according to claim 1 or 2, wherein the heating conditions of the plasticizing and densifying step include a heating condition of heating the carbonaceous material in the single-screw or twin-screw extruder-kneader to at least a temperature between 100°C and 230°C, inclusive.

4. The method for producing an activated carbon according to any one of claims 1 to 3, wherein the plasticizing and densifying step is performed in a state in which the pressure inside the single-screw or twin-screw extruder-kneader is reduced to a pressure of -0.001 MPaG to -0.067 MPaG.

5. The method for producing an activated carbon according to any one of claims 1 to 4, the method further comprising: a molding step of molding the carbonaceous material to be subjected to the activation treatment step into pellets in advance.

6. The method for producing an activated carbon according to any one of claims 1 to 5, the method further comprising: a pre-treatment step of hardening and reacting the carbonaceous material to be subjected to the activation treatment step through heat treatment in advance.

7. The method for producing an activated carbon according to claim 6, wherein the pre-treatment step is performed under heating conditions at a temperature between 210°C and 320°C, inclusive.

8. The method for producing an activated carbon according to claim 6 or 7, wherein the pre-treatment step is performed in an inert gas or in a combustion exhaust gas.

9. An activated carbon which is obtained using the method for producing an activated carbon according to any one of claims 1 to 8.

10. An activated carbon,
    wherein a BWC as determined by ASTM D5228 is less than 17,
    a first ratio ($VA_{0.168}/VA_{0.9}$) is 0.64 or less, the first ratio being the ratio of an amount adsorbed ($VA_{0.168}$) of an amount of gas adsorbed in pores having a pore diameter that is equal to or smaller than a pore diameter (value calculated using the CI method) corresponding to a relative pressure of 0.168 in a nitrogen adsorption isotherm at 77 K, to an amount of gas adsorbed ($VA_{0.9}$) in pores having a pore diameter that is equal to or smaller than a pore diameter (value calculated using the CI method) corresponding to a relative pressure of 0.9 in the nitrogen adsorption isotherm,
    a second ratio (($VA_{0.484}-VA_{0.168}$)/$VA_{0.9}$) is 0.20 or more, the second ratio being the ratio of the difference ($VA_{0.484}-VA_{0.168}$) between an amount of gas adsorbed in pores having a pore diameter that is equal to or smaller than a pore diameter (value calculated using the CI method) corresponding to a relative pressure of 0.484 in the nitrogen adsorption isotherm at 77 K and the amount of gas adsorbed in the pores having a pore diameter that is equal to or smaller than the pore diameter (value calculated using the CI method) corresponding to the relative pressure of 0.168 in the nitrogen adsorption isotherm, to the amount of gas adsorbed ($VA_{0.9}$) in the pores having a pore diameter that is equal to or smaller than the pore diameter (value calculated using the CI method) corresponding to the relative pressure of 0.9 in the nitrogen adsorption isotherm, and

a third ratio (($VA_{0.9}$-$VA_{0.484}$)/$VA_{0.9}$) is 0.13 or more, the third ratio being the ratio of the difference ($VA_{0.9}$-$VA_{0.484}$) between the amount of gas adsorbed in the pores having a pore diameter that is equal to or smaller than the pore diameter (value calculated using the CI method) corresponding to the relative pressure of 0.9 in the nitrogen adsorption isotherm at 77 K and the amount of gas adsorbed in the pores having a pore diameter that is equal to or smaller than the pore diameter (value calculated using the CI method) corresponding to the relative pressure of 0.484 in the nitrogen adsorption isotherm, to the amount of gas adsorbed ($VA_{0.9}$) in the pores having a pore diameter that is equal to or smaller than the pore diameter (value calculated using the CI method) corresponding to the relative pressure of 0.9 in the nitrogen adsorption isotherm.

11. An activated carbon,
    wherein a BWC as determined by ASTM D5228 is 17 or more,
    a first ratio ($VA_{0.168}$/$VA_{0.9}$) is 0.70 or less, the first ratio being the ratio of an amount adsorbed ($VA_{0.168}$) of an amount of gas adsorbed in pores having a pore diameter that is equal to or smaller than a pore diameter (value calculated using the CI method) corresponding to a relative pressure of 0.168 in a nitrogen adsorption isotherm at 77 K, to an amount of gas adsorbed ($VA_{0.9}$) in pores having a pore diameter that is equal to or smaller than a pore diameter (value calculated using the CI method) corresponding to a relative pressure of 0.9 in the nitrogen adsorption isotherm,
    a second ratio (($VA_{0.484}$-$VA_{0.168}$)/$VA_{0.9}$) is 0.13 or more, the second ratio being the ratio of the difference ($VA_{0.484}$-$VA_{0.168}$) between an amount of gas adsorbed in pores having a pore diameter that is equal to or smaller than a pore diameter (value calculated using the CI method) corresponding to a relative pressure of 0.484 in the nitrogen adsorption isotherm at 77 K and the amount of gas adsorbed in the pores having a pore diameter that is equal to or smaller than the pore diameter (value calculated using the CI method) corresponding to the relative pressure of 0.168 in the nitrogen adsorption isotherm, to the amount of gas adsorbed ($VA_{0.9}$) in the pores having a pore diameter that is equal to or smaller than the pore diameter (value calculated using the CI method) corresponding to the relative pressure of 0.9 in the nitrogen adsorption isotherm, and
    a third ratio (($VA_{0.9}$-$VA_{0.484}$)/$VA_{0.9}$) is 0.07 or more, the third ratio being the ratio of the difference ($VA_{0.9}$-$VA_{0.484}$) between the amount of gas adsorbed in the pores having a pore diameter that is equal to or smaller than the pore diameter (value calculated using the CI method) corresponding to the relative pressure of 0.9 in the nitrogen adsorption isotherm at 77 K and the amount of gas adsorbed in the pores having a pore diameter that is equal to or smaller than the pore diameter (value calculated using the CI method) corresponding to the relative pressure of 0.484 in the nitrogen adsorption isotherm, to the amount of gas adsorbed ($VA_{0.9}$) in the pores having a pore diameter that is equal to or smaller than the pore diameter (value calculated using the CI method) corresponding to the relative pressure of 0.9 in the nitrogen adsorption isotherm.

12. The activated carbon according to claim 10, wherein the BWC as determined by ASTM D5228 is less than 17, and a butane retentivity is 2 g/100 ml or less.

13. The activated carbon according to claim 11, wherein the BWC as determined by ASTM D5228 is 17 or more, and a butane retentivity is 2.7 g/100 ml or less.

14. The activated carbon according to any one of claims 9 to 13, wherein the activated carbon has a phosphorus content of 3 mass% or less when the phosphorus content is measured using fluorescence X-rays.

15. A canister comprising the activated carbon according to any one of claims 9 to 14 as an adsorbent material.

16. An activated carbon,
    wherein a fourth ratio (($VA_{0.484}$-$VA_{0.168}$)/$VA_{0.9}$)/($VA_{0.168}$/$VA_{0.9}$) is 0.32 or more, the fourth ratio being calculated from:

    a first ratio ($VA_{0.168}$/$VA_{0.9}$) of an amount adsorbed ($VA_{0.168}$) of an amount of gas adsorbed in pores having a pore diameter that is equal to or smaller than a pore diameter (value calculated using the CI method) corresponding to a relative pressure of 0.168 in a nitrogen adsorption isotherm at 77 K, to an amount of gas adsorbed ($VA_{0.9}$) in pores having a pore diameter that is equal to or smaller than a pore diameter (value calculated using the CI method) corresponding to a relative pressure of 0.9 in the nitrogen adsorption isotherm, and

a second ratio $((VA_{0.484}-VA_{0.168})/VA_{0.9})$ of the difference $(VA_{0.484}-VA_{0.168})$ between an amount of gas adsorbed in pores having a pore diameter that is equal to or smaller than a pore diameter (value calculated using the CI method) corresponding to a relative pressure of 0.484 in the nitrogen adsorption isotherm at 77 K and the amount of gas adsorbed in the pores having a pore diameter that is equal to or smaller than the pore diameter (value calculated using the CI method) corresponding to the relative pressure of 0.168 in the nitrogen adsorption isotherm, to the amount of gas adsorbed $(VA_{0.9})$ in the pores having a pore diameter that is equal to or smaller than the pore diameter (value calculated using the CI method) corresponding to the relative pressure of 0.9 in the nitrogen adsorption isotherm.

17. The activated carbon according to claim 16, which is obtained using the method for producing an activated carbon according to any one of claims 1 to 8.

18. A canister comprising the activated carbon according to claim 16 or 17 as an adsorbent material.

Fig.1

## Fig.2

## Fig.3

**INTERNATIONAL SEARCH REPORT**

| International application No. |
| --- |
| PCT/JP2017/026711 |

A. CLASSIFICATION OF SUBJECT MATTER
*C01B32/342*(2017.01)i, *B01J20/20*(2006.01)i, *B01J20/28*(2006.01)i, *B01J20/30*
(2006.01)i

According to International Patent Classification (IPC) or to both national classification and IPC

B. FIELDS SEARCHED

Minimum documentation searched (classification system followed by classification symbols)
C01B32/342, B01J20/20, B01J20/28, B01J20/30

Documentation searched other than minimum documentation to the extent that such documents are included in the fields searched
Jitsuyo Shinan Koho      1922-1996   Jitsuyo Shinan Toroku Koho   1996-2017
Kokai Jitsuyo Shinan Koho   1971-2017   Toroku Jitsuyo Shinan Koho   1994-2017

Electronic data base consulted during the international search (name of data base and, where practicable, search terms used)
JSTPlus(JDreamIII), JST7580(JDreamIII), JSTChina(JDreamIII)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2000-313611 A (Mitsubishi Chemical Corp.),<br>14 November 2000 (14.11.2000),<br>claims; paragraphs [0008] to [0022], [0033];<br>examples<br>(Family: none) | 1-3,5-18<br>4 |
| X<br>Y | JP 11-349320 A (Mitsubishi Chemical Corp.),<br>21 December 1999 (21.12.1999),<br>claims; paragraphs [0002], [0007] to [0016];<br>examples<br>(Family: none) | 1-18<br>4 |

☒   Further documents are listed in the continuation of Box C.     ☐   See patent family annex.

| | |
| --- | --- |
| *    Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>16 August 2017 (16.08.17) | Date of mailing of the international search report<br>29 August 2017 (29.08.17) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (January 2015)

## EP 3 489 195 A1

### INTERNATIONAL SEARCH REPORT

| International application No. |
|---|
| PCT/JP2017/026711 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 6-056416 A  (Westvaco Corp.), 01 March 1994 (01.03.1994), claims; paragraphs [0001] to [0015]; examples & US 5250491 A column 1, line 5 to column 7, line 14; examples; claims & EP 583174 A1           & DE 583174 T & CA 2092351 A           & MX 9301916 A | 9-18 |
| X | JP 6-009208 A  (Westvaco Corp.), 18 January 1994 (18.01.1994), claims; paragraphs [0001] to [0015]; examples & US 5204310 A column 1, line 5 to column 6, line 68; examples; claims & EP 557208 A1           & DE 69320385 C & CA 2089925 A           & MX 9300898 A | 9-18 |
| A | CN 104628000 A  (Fuzhou University), 20 May 2015 (20.05.2015), entire text (Family: none) | 1-18 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2618583 B